# EUROPÄISCHE PATENTSCHRIFT

(11) **EP 0 860 727 B1**
(45) Veröffentlichungstag und Bekanntmachung des Hinweises auf die Patenterteilung: **13.08.2003**
(21) Anmeldenummer: 98101113.3
(22) Anmeldetag: 23.01.1998
(51) Int. Cl.: G02B 26/06, G02B 26/08

(54) **Vorrichtung zur Umschaltung von optischen Bildern zwischen verschiedenen Kanälen**
Device to switch optical images between different channels
Dispositif pour commuter des images optiques entre des canaux differents

(30) Priorität: 25.02.1997 DE 19707432
(43) Veröffentlichungstag der Anmeldung: 26.08.1998
(73) Patentinhaber: Bodenseewerk Gerätetechnik GmbH, 88662 Überlingen (DE)
(72) Erfinder: Büttner, Knut, 81737 München (DE)
(74) Vertreter: Weisse, Jürgen, Dipl.-Phys.

(56) Entgegenhaltungen:
- EP-A- 0 663 770
- DE-C- 4 402 775
- GB-A- 2 146 137
- US-A- 5 049 740
- US-A- 5 519 206

## Beschreibung

### Technisches Gebiet

Die Erfindung betrifft eine Vorrichtung zur Umschaltung von optischen Bildern zwischen verschiedenen Kanälen.

Eine solche Vorrichtung kann z.B. dazu dienen, verschiedene Teile eines Gesichtsfeldes oder sonstwie verschiedene Objekte mit je einem optischen System in verschiedenen optischen Kanälen zu beobachten und die dabei erfaßten Bilder in schneller Folge auf einen gemeinsamen optischen Kanal und z.B. einen darin angeordneten bildauflösenden Sensor zu leiten. Das wäre die Funktion eines "optischen Multiplexers". Eine solche Vorrichtung kann aber auch dazu dienen, ein in dem gemeinsamen optischen Kanal erzeugtes Bild nacheinander auf verschiedene parallele Kanäle zu leiten. Das wäre die Funktion eines "optischen Demultiplexers".

### Stand der Technik

Bekannte Vorrichtungen dieser Art arbeiten mit umlaufenden Polygonspiegeln. Die mit Polygonspiegeln arbeitenden bekannten Vorrichtungen haben den Nachteil, daß die Umschaltung jeweils nur in einer einzigen, genau vorgegebenen Reihenfolge stattfindet. Durch die Bewegung der Polygonspiegel tritt eine Bildverschmierung ein, durch welche die Drehzahl des Polygonspiegels und damit die mögliche Frequenz der Umschaltung (Multiplex-Rate) begrenzt ist.

Andere bekannte Vorrichtung arbeiten mit Verlagerung von Teilen des abbildenden optischen Systems. Auch eine solche Verschiebung von Teilen des abbildenden optischen Systems begrenzt die Multiplex-Rate durch die Trägheitsmomente und -kräfte der zu verschiebenden Teile.

Es ist weiterhin bekannt, verschiedene Objekte über getrennte optische Kanäle oder Pfade und eine gemeinsame Optik auf einen einzigen Detektor abzubilden, wobei die getrennten optischen Kanäle oder Pfade einzeln geschaltet werden. Das erfordert aber eine große numerische Apertur dieser gemeinsamen Optik. Zusätzlich ergeben sich hier Probleme durch Streulicht.

Die EP-A-0 469 293 beschreibt ein mikromechanisches Spiegelsystem mit einer Vielzahl von elektrisch ansteuerbaren Spiegelelementen. Ein ähnliches mikromechanisches Spiegelsystem ist in der EP-A-0 657 760 beschrieben.

### Offenbarung der Erfindung

Der Erfindung liegt die Aufgabe zugrunde eine Vorrichtung zur Umschaltung von optischen Bildern zwischen verschiedenen optischen Kanälen zu schaffen.

Die Umschaltung soll dabei mit hoher Geschwindigkeit möglich sein. Es soll keine Bildverschmierung eintreten. Die Umschaltung zwischen den optischen Kanälen soll in beliebiger Aufeinanderfolge möglich sein. Die mit großen Massen oder der Notwendigkeit einer großen numerischen Apertur der Optik verbundenen Probleme des Standes der Technik sollen vermieden werden.

Erfindungsgemäß wird die Aufgabe gelöst durch
(a) eine Mehrzahl von abbildenden optischen Systemen, durch welche jeweils in einem zugeordneten, umschaltbaren, optischen Kanal eine zugehörige Ebene und eine Zwischenabbildungs-Ebene konjugiert aufeinander abbildbar sind,
(b) ein in der Zwischenabbildungs-Ebene angeordnetes mikromechanisches Spiegelsystem (Spiegelarray) mit einem Raster von kippbar gelagerten, ansteuerbaren Spiegelelementen,
(c) ein weiteres abbildendes optisches System durch welches in einem gemeinsamen Kanal die Zwischenabbildungs-Ebene und eine dem gemeinsamen Kanal zugeordnete Ebene konjugiert aufeinander abbildbar sind und
(d) Ansteuermittel zur Ansteuerung der Spiegelelemente des mikromechanischen Spiegelsystems derart, daß die Spiegelelemente wahlweise einen der umschaltbaren Kanäle mit dem gemeinsamen Kanal optisch koppeln.

Durch jedes der abbildenden optischen Systeme in den umschaltbaren Kanälen wird z.B. ein reelles Bild der zugehörigen Ebene in der Zwischenabbildungs-Ebene erzeugt. Durch das mikromechanische Spiegelsystem wird das Bild aus einem der umschaltbaren Kanäle in den gemeinsamen Kanal reflektiert und durch das weitere optische System in der dem gemeinsamen Kanal zugeordneten Ebene abgebildet. Die Zwischenabbildung auf dem mikromechanischen Spiegelystem wirkt dabei für das weitere optische System wie ein selbstleuchtendes Bild. Da auf dem mikromechanischen Spiegelsystem ein reelles Bild erzeugt wird, treten keine Interferenzen auf. Die Umschaltung von einem der umschaltbaren Kanäle auf einen anderen durch entsprechende Ansteuerung der Spiegelelemente kann sehr schnell und mit beliebiger Aufeinanderfolge der Kanäle erfolgen. Trägheitskräfte sind dabei vernachlässigbar. Es tritt keine Bildverschmierung auf. Mit der gleichen optischen Anordnung kann auch bei Umkehrung der Strahlenrichtung die dem gemeinsamen Kanal zugeordnete Ebene nacheinander auf die den einzelnen umschaltbaren Kanälen zugeordneten Ebenen abgebildet werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig.1: zeigt einen einzelnen Abbildungs-Strahlengang bei einer ersten Ausführung einer Vorrichtung zur Umschaltung von optischen Bildern zwischen verschiedenen Kanälen.
- Fig.2: zeigt eine mit Abbildungs-Strahlengängen nach Fig.1 arbeitende Vorrichtung zur Umschaltung von optischen Bildern zwischen zwei verschiedenen Kanälen.
- Fig.3: ist eine schematische Teilansicht in vergrößertem Maßstab eines mikromechanischen Spiegelsystems, wie es bei der Ausführung von Fig.1 und 2 benutzt wird in einer Schaltstellung entsprechend Fig.1.
- Fig.4: zeigt das mikromechanische Spiegelsystem von Fig.3 in einer anderen Schaltstellung.
- Fig.5: zeigt in vergrößertem Maßstab ein Spiegelgitter, wie es in den Strahlengängen von Fig.1 und 2 verwendet wird.
- Fig.6: zeigt einen einzelnen Abbildungs-Strahlengang bei einer zweiten Ausführung einer Vorrichtung zur Umschaltung von optischen Bildern zwischen zwei verschiedenen Kanälen.

### Bevorzugte Ausführungen der Erfindung

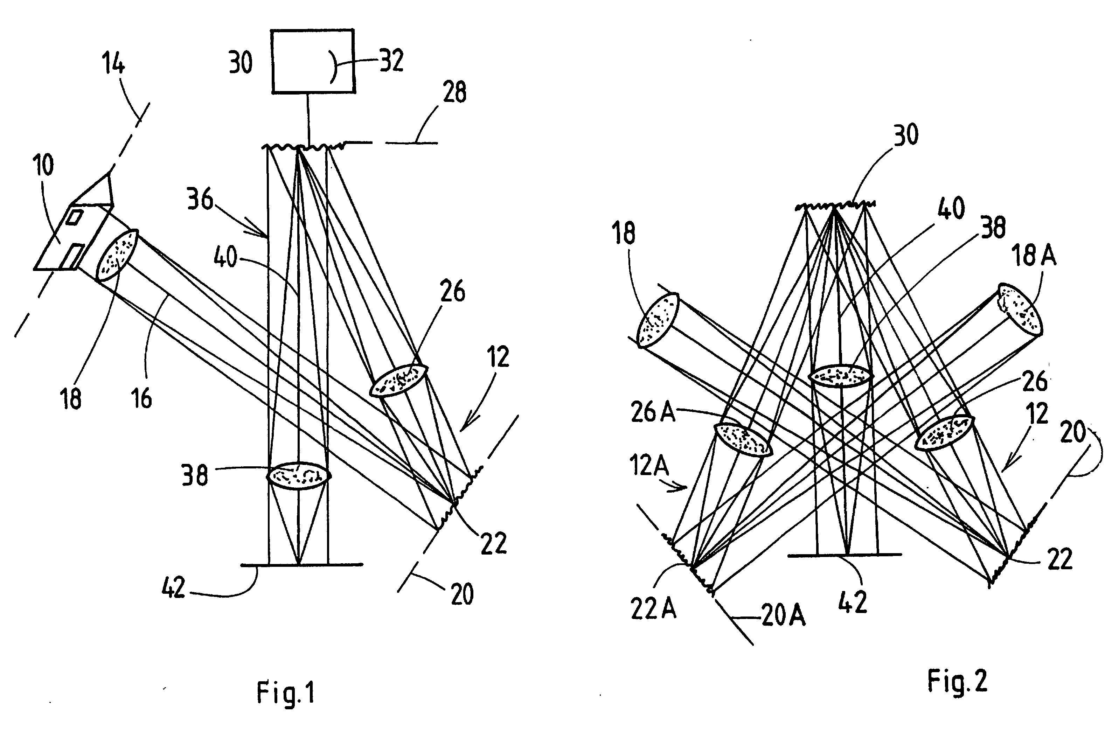

In Fig.1 ist mit 10 ein Objekt bezeichnet, das in einer dem "umschaltbaren" optischen Kanal 12 zugeordneten Ebene 14 angeordnet ist. Die Ebene 14 kann z.B. im Unendlichen liegen. Die Ebene 14 erstreckt sich senkrecht zur optischen Achse 16 eines ersten abbildenden, optischen Teilsystems 18. Das optische Teilsystem 18 ist in Fig.1 als Linse dargestellt.

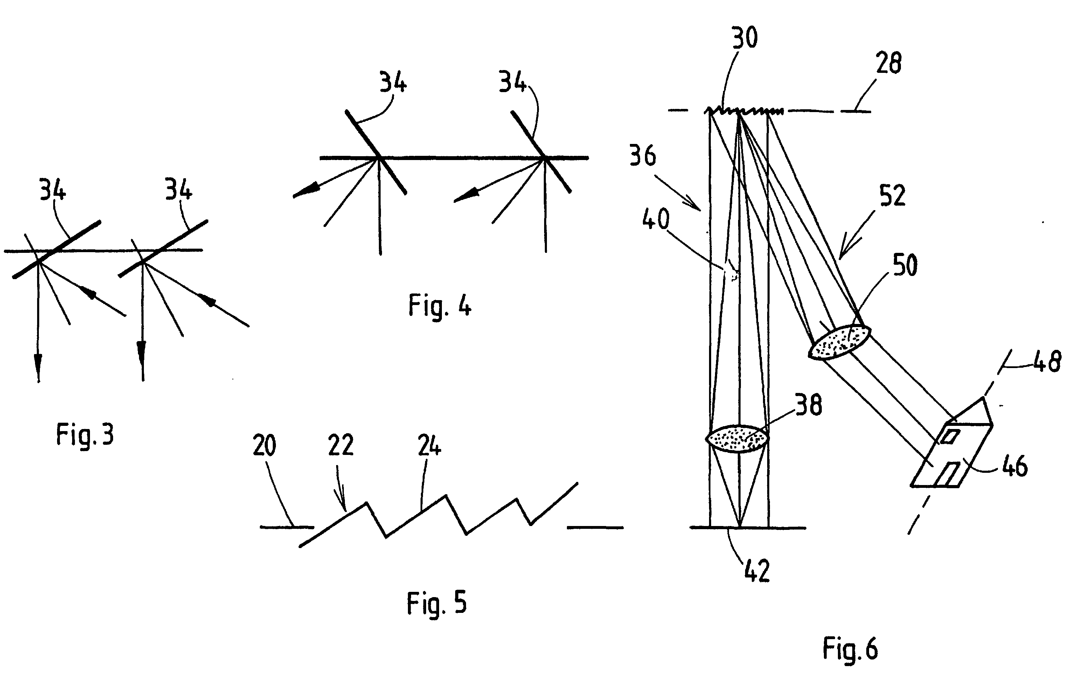

Das erste optische Teilsystem 18 bildet die Ebene 14 in einer Spiegelebene 20 ab (oder umgekehrt). In der Spiegelebene 20 sitzt ein Spiegelgitter 22 von parallelen, zur Spiegelebene 20 geneigten Spiegelstreifen 24. Ein solches Spiegelgitter ist schematisch in Fig.5 in vergrößertem Maßstab dargestellt.

Ein zweites abbildendes optisches Teilsystem 26 bildet die Spiegelebene 20 in einer Zwischenabbildungs-Ebene 28 ab (oder umgekehrt). Das zweite abbildende, optische Teilsystem ist in Fig.1 ebenfalls als Linse dargestellt. Die Spiegelebene 20 und die Zwischenabbildungs-Ebene 28 sind zueinander geneigt. Die Spiegelebene 20 und die Zwischenabbildungs-Ebene 28 stehen auch nicht senkrecht zu der optischen Achse des zweiten abbildenden optischen Teilsystems. Die Spiegelebene 20, das zweite abbildende, optische Teilsystem 26 und die Zwischenabbildungs-Ebene 28 sind so zueinander angeordnet, daß die Scheimpflug-Bedingung erfüllt ist: Die Spiegelebene 20 und die Zwischenabbildungs-Ebene 28 schneiden sich mit der Hauptebene des zweiten abbildenden, optischen Teilsystems 26 in einer Geraden. Das Spiegelgitter 22 sorgt dafür, daß bei Erfüllung dieser Scheimpflug-Bedingung das von dem ersten abbildenden, optischen Teilsystem 18 einfallende Abbildungs-Lichtbündel auf das zweite abbildende, optische Teilsystem reflektiert wird. Auf diese Weise wird das auf dem Spiegelgitter 22 erzeugte, scharfe reelle Bild des Objekts wiederum scharf in der Zwischenabbildungs-Ebene 28 abgebildet.

Das in der Spiegelebene erzeugte, scharfe reelle Bild des Objekts 10 wirkt für das zweite abbildende, optische Teilsystem 26 wie ein selbstleuchtendes Objekt. Alle Spiegelstreifen 24 des Spiegelgitters liegen im wesentlichen in der Schärfenebene dieser Abbildung. Das Abbildungs-Lichtbündel wird aber in Richtung auf das zweite abbildende, optische Teilsystem reflektiert. Es treten keine Interferenzen auf, da in der Ebene des Spiegelgitters 22 ein reelles Bild erzeugt wird.

In der Zwischenabbildungs-Ebene sitzt ein mikromechanisches Spiegelsystem 30. Dieses mikromechanische Spiegelsystem kann beispielsweise nach Art der oben erwähnten EP-A-0 469 293 oder der EP-A-0 657 760 aufgebaut sein. Das Spiegelsystem 30 besteht aus einem zweidimensionalen Raster von Spiegelelementen 34 (Fig.3 und 4). Die Spiegelelemente 34 sind durch eine Ansteuerschaltung 32 in bekannter und daher nicht im einzelnen dargestellter Weise ansteuerbar. Bei der vorliegenden Ausführung werden alle Spiegelelemente 34 in gleicher Weise angesteuert. In der Position der Spiegelelemente 34 von Fig.1 und 3 sind die Spiegelelemente 34 so orientiert, daß sie das Abbildungs-Lichtbündel in einem "gemeinsamen" optischen Kanal 36 in Richtung auf ein weiteres abbildendes optisches System 38 längs dessen optischer Achse 40 reflektieren. Das weitere abbildende optische System 38 bildet das mikromechanische Spiegelsystem 30 scharf in einer Ebene 42 ab. Die Ebene 42 ist die dem gemeinsamen optischen Kanal 36 zugeordnete Ebene.

Auch hier wirkt das in der Zwischenabbildungs-Ebene 28 auf dem mikromechanischen Spiegelsystem 30 erzeugte, scharfe Bild für das weitere abbildende, optische System 38 wie ein selbstleuchtendes Objekt. Die Spiegelelemente 34 liegen praktisch in der Schärfenebene der Abbildung. Die Spiegelelemente 34 sind so orientiert, daß sie die Energie des Abbildungs-Lichtbündels auf das weitere abbildende, optische System 38 leiten.

Die Strahlenrichtung kann natürlich auch umgekehrt sein: Ein in der Ebene 42 angeordnetes Objekt kann über Zwischenabbildungen in der Zwischenabbildungs-Ebene 28 und der Spiegelebene 22 in der Ebene 14 abgebildet werden.

Fig.1 zeigt den Strahlengang für einen Kanal 12 und den gemeinsamen Kanal 36. In entsprechender Weise sind außer dem Kanal 12 weitere Kanäle durch das mikromechanische Spiegelsystem 30 wahlweise mit dem gemeinsamen Kanal 36 optisch koppelbar. Fig.2 zeigt die Anordnung mit zwei umschaltbaren Kanälen 12 und 12A. Der optische Aufbau des Kanals 12A entspricht spiegelbildlich dem des Kanals 12. Entsprechende Teile sind in Kanal 12A mit den gleichen Bezugszeichen versehen wie in Kanal 12 aber mit dem Zusatz "A" gekennzeichnet.

Das mikromechanische Spiegelsystem 30 ist zur Umschaltung der Kanäle zwischen zwei Positionen verstellbar, die in den Figuren 3 und 4 dargestellt sind. In der in Fig.3 dargestellten Position wird das Abbildungs-Lichtbündel aus dem Kanal 12 in den gemeinsamen Kanal 36 geleitet. In der Ebene 42 wird das Bild eines von dem abbildenden optischen Teilsystem 18 in der zugehörigen Ebene 14 erfaßten Objektes erzeugt. In der in Fig.4 dargestellten Position wird das Abbildungs-Lichtbündel aus dem Kanal 12A in den gemeinsamen Kanal 36 geleitet. In der Ebene 42 wird das Bild eines von dem abbildenden optischen Teilsystem 18A in der zugehörigen Ebene erfaßten Objektes erzeugt.

In gleicher Weise können mehr als zwei umschaltbare Kanäle um die optische Achse 40 des abbildenden optischen Systems 38 herum angeordnet sein, beispielsweise zwei weitere Kanäle in der zur Papierebene von Fig.2 senkrechten Ebene.

Ein Schnitt längs einer die optische Achse 38 enthaltenden, zu der Papierebene senkrechte Ebene würde dann genau so aussehen wie Fig.2. Die Spiegelelemente 34 des mikromechanischen Spiegelsystems müssen dann um zwei Achsen kippbar sein.

Durch die Anordnung des mikromechanischen Spiegelsystems 30 symmetrisch zu der optischen Achse 40 des abbildenden, optischen Systems 38 und die symmetrische Anordnung der Kanäle 12 und 12A tritt bei der Umschaltung der verschiedenen Kanäle 12 und 12A keine Vignettierung der Abbildungs-Lichtbündel ein.

Fig.6 zeigt einen "umschaltbaren" Kanal und den gemeinsamen Kanal bei einer abgewandelten Ausführung.

Bei der Ausführung nach Fig.6 wird ein Objekt 46 in einer Ebene 48 durch ein abbildendes optisches System 50 in der Zwischenabbildungs-Ebene 28 abgebildet. Das abbildende optische System 50 ist hier eine dezentrierte Optik. Dadurch kann auf eine weitere Zwischenabbildung wie in der "Spiegelebene" von Fig.1 und 2 verzichtet werden. Die Ebene 48 wird direkt auf die Zwischenabbildungs-Ebene 28 abgebildet. Das mikromechanische Spiegelsystem und der gemeinsame Kanal entsprechen denen von Fig.1 und 2. Entsprechende Teile sind daher in Fig.6 mit den gleichen Bezugszeichen versehen wie in Fig.1 und 2. Das abbildende, optische System 50 bildet einen Kanal 52 der "umschaltbaren" optischen Kanäle Mehrere solcher umschaltbarer Kanäle sind um die optische Achse 40 des abbildenden, optischen Systems 38 herum angeordnet.

Die beschriebenen optischen Multiplexer oder Demultiplexer können verschiedene Anwendungen finden.

In der Ebene 42 kann ein bildauflösender Sensor, z.B. ein Matrixdetektor, angeordnet sein. Die verschiedenen umschaltbaren Kanäle 12, 12A ... können dann unterschiedliche Sektoren eines ausgedehnten Gesichtsfeldes beobachten. Über das mikromechanische Spiegelsystem 30 können die verschiedenen Sektoren in schneller, erforderlichenfalls variabler, Folge nacheinander von dem bildauflösenden Sensor erfaßt werden. Zum Testen von infrarotempfindlichen Sensoren in Suchköpfen von zielverfolgenden Flugkörpern ist es erforderlich, schnell veränderliche Wärmebilder zu erzeugen, um z.B. ein schnell bewegliches, heißes Ziel zu simulieren. Die Erzeugung schnell veränderlicher Wärmebilder ist schwierig. Temperaturen der das Wärmebild darstellenden Oberflächen-Elemente lassen sich nicht schnell ändern. Es ist dann möglich, in den den verschiedenen Kanälen 12, 12A .. zugeordneten Ebenen verschiedene, sich jeweils nur mit Trägheit verändernde Wärmebilder zu erzeugen und zur Simulation schneller Änderungen durch das mikromechanische Spiegelsystem eine Fortschaltung der Kanäle zu bewirken. In beiden Fällen liegt die "Quelle" der Bildinformation in den Ebenen 14 der umschaltbaren Kanäle, während in der dem gemeinsamen Kanal zugeordneten Ebene 42 eine "Senke" der Bildinformation angeordnet ist. Die Vorrichtung wirkt als "optischer Multiplexer".

Es ist aber auch möglich, ein in der Ebene 42 liegendes Objekt durch das mikromechanische Spiegelsystem in schneller Folge nacheinander auf die verschiedenen optischen Kanäle zu leiten. Das kann z.B. dazu dienen, schnelle Vorgänge mit relativ trägen, bildauflösenden Sensoren zu erfassen. Es ist dann in jeder einem umschaltbaren optischen Kanal zugeordneten Ebene, z.B. Ebene 14, ein solcher bildauflösender Sensor angeordnet. Durch die schnelle Umschaltung kann ein schneller Vorgang dadurch erfaßt werden, daß jeder der relativ trägen, bildauflösenden Sensoren nur eine Phase dieses Vorganges erfaßt.

## Patentansprüche

1. Vorrichtung zur Umschaltung von optischen Bildern zwischen verschiedenen Kanälen, mit folgenden Merkmalen:
(a) eine Mehrzahl von abbildenden optischen Systemen (18,26;18A,26A; 50), durch welche jeweils in einem zugeordneten, umschaltbaren, optischen Kanal (12,12A) eine zugehörige Ebene (14;48) und eine Zwischenabbildungs-Ebene (28) konjugiert aufeinander abbildbar sind,
(b) ein in der Zwischenabbildungs-Ebene (28) angeordnetes mikromechanisches Spiegelsystem (Spiegelarray) (30) mit einem Raster von kippbar gelagerten, ansteuerbaren Spiegelelementen (34),
(c) ein weiteres abbildendes optisches System (38) durch welches in einem gemeinsamen Kanal (36) die Zwischenabbildungs-Ebene (28) und eine dem gemeinsamen Kanal (36) zugeordnete Ebene (42) konjugiert aufeinander abbildbar sind und
(d) Ansteuermittel (32) zur Ansteuerung der Spiegelelemente (34) des mikromechanischen Spiegelsystems (30) derart, daß die Spiegelelemente (34) wahlweise einen der umschaltbaren Kanäle (12;12A) mit dem gemeinsamen Kanal (36) optisch koppeln.

2. Vorrichtung nach Anspruch 1, **dadurch gekennzeichnet, daß** die abbildenden, optischen Systeme der umschaltbaren, optischen Kanäle jeweils
(a) ein erstes abbildendes, optisches Teilsystem (18;18A) enthalten, durch welches die dem Kanal (12,12A) zugeordnete Ebene (14) und eine Spiegelebene (22;22A) konjugiert aufeinander abbildbar sind,
(b) eine in der Spiegelebene (20;20A) angeordnete Spiegelanordnung (22;22A) und
(c) ein zweites abbildendes, optisches Teilsystem (26;26A), durch welches die Spiegelebene (20;20A) und die Zwischenabbildungs-Ebene (28) konjugiert aufeinander abbildbar sind.

3. Vorrichtung nach Anspruch 2, **dadurch gekennzeichnet, daß**
(a) die Spiegelebene (20), das zweite abbildende, optische Teilsystem (26) und die Zwischenabbildungs-Ebene (28) in einer die Scheimpflug-Bedingung erfüllenden Lage zueinander angeordnet sind und
(b) die Spiegelanordnung (22) ein Spiegelgitter von zur Spiegelebene (20) geneigten, schmalen Spiegelstreifen (24) bildet, durch welche der abbildende Strahlengang von dem ersten abbildenden, optischen Teilsystem (18) auf das zweite abbildende, optische Teilsystem (26) und das in der Zwischenabbildungs-Ebene (28) liegende mikromechanische Spiegelsystem (30) umlenkbar ist.

4. Vorrichtung nach Anspruch 1, **dadurch gekennzeichnet, daß** die abbildenden optischen Systeme (50) der umschaltbaren optischen Kanäle (52) je eine dezentrierte Optik enthalten, durch welche die dem optischen Kanal (52) zugeordnete Ebene (48) und die Zwischenabbildungs-Ebene (28) unmittelbar konjugiert aufeinander abbildbar sind.

5. Vorrichtung nach einem der Ansprüche 1 bis 4, **dadurch gekennzeichnet, daß** die Mehrzahl von abbildenden optischen Systemen, die jeweils einen optischen Kanal (12;12A;52) bilden, um eine senkrecht zu der Zwischenabbildungs-Ebene (28) verlaufende, die optische Achse (40) des weiteren optischen Systems (38) bildende Achse herum angeordnet sind, von denen jedes eine zugeordnete Ebene (14;48) in der Zwischenabbildungs-Ebene (28) abbildet.

6. Vorrichtung nach einem der Ansprüche 1 bis 5, **dadurch gekennzeichnet, daß** in der dem gemeinsamen optischen Kanal (36) zugeordneten Ebene (42) ein bildauflösender Sensor angeordnet ist.

7. Vorrichtung nach Anspruch 6, **dadurch gekennzeichnet, daß** in den den umschaltbaren Kanälen (12,12A;52) zugeordneten Ebenen jeweils testbilderzeugende Mittel angeordnet sind, wobei durch das mikromechanische Spiegelsystem (30) in schneller Folge eine Umschaltung der verschiedenen umschaltbaren Kanäle (12,12A;52nm) auf den gemeinsamen Kanal (36) erfolgt.

8. Vorrichtung nach Anspruch 7, **dadurch gekennzeichnet, daß**
(a) der bildauflösende Sensor ein Infrarot-Sensor ist und
(b) die testbilderzeugenden Mittel zur Erzeugung von Wärmebildern eingerichtet sind.

9. Vorrichtung nach Anspruch 5, **dadurch gekennzeichnet, daß** jeder der umschaltbaren, optischen Kanäle (12,12A;52) einen Sektor eines ausgedehnten Gesichtsfeldes erfaßt, wobei durch das mikromechanische Spiegelsystem (30) in schneller Folge eine Umschaltung der verschiedenen umschaltbaren Kanäle (12,12A;52) auf den gemeinsamen Kanal (36) erfolgt.

## Claims

1. Device for shifting optical images between individual channels, with the following features:
(a) a plurality of imaging optical systems (18.26:18A,26A;50) adapted to image conjugately upon each other, in an associated shiftable optical channel (12,12A), an associated plane (14;48) and an intermediate image plane (28);
(b) a micro-mechanical mirror system (mirror array) (30) arranged in said intermediate image plane (28) and having a grid of mirror elements (34) adapted to be tilted and actuated;
(c) a further imaging optical system (38) having an optical axis and adapted to image conjugately upon each other, in a common channel (36), the intermediate image plane (28) and a plane (42) associated with the common channel (36); and
(d) actuating means (32) for actuating the mirror elements (34) of the micro-mechanical mirror system (30) in such a manner, that the mirror elements (34) optically couple optionally one of the shiftable channels (12;12A) with the common channel (36).

2. Device as claimed in claim 1, **characterised in that** the imaging optical systems of the shiftable optical channels comprise:
(a) a first imaging optical sub-system (18;18A) adapted to image conjugately upon each other the plane (14) associated with the corresponding channel (12;12A) and a mirror plane (22;22A);
(b) a mirror arrangement (22;22A) arranged in the mirror plane (20;20A); and
(c) a second imaging optical sub-system (26;26A) adapted to image conjugately upon each other the mirror plane (20;20A) and the intermediate image plane (28).

3. Device as claimed in claim 2, **characterised in that**
(a) the mirror plane (20), the second imaging optical sub-system (26) and the intermediate image plane (28) are arranged relative to each other in a position, in which Scheimpflug's condition is fulfilled; and
(b) the mirror arrangement (22) forms a mirror grid of narrow mirror strips (24) inclined with respect to the mirror plane (20) and adapted to deflect the imaging path of rays from the first imaging optical sub-system (18) to the second imaging optical sub-system (26) and to the micro-mechanical mirror system (30) located in the intermediate image plane (28).

4. Device as claimed in claim 1, **characterised in that** the imaging optical systems (50) of the shiftable optical channels (52) each have a decentered lens system adapted to image directly conjugately upon each other the plane (48) associated with the optical channel (52) and the intermediate image plane (28).

5. Device as claimed in claim 1, **characterised in that** the plurality of imaging optical systems each forming an optical channel (12;12A;52) is arranged about an axis extending perpendicularly to the intermediate image plane (28) and forming the optical axis (40) of the further optical system (38), each of the imaging optical systems imaging an associated plane (14;48) in the intermediate image plane (28).

6. Device as claimed in claim 1, **characterised in that** an image-resolving sensor is arranged in the plane (42) associated with the common optical channel (36).

7. Device as claimed in claim 6, **characterised in that** means generating test images are arranged in the planes associated with the shiftable channels (12;12A;52), the micro-mechanical mirror system (30) being adapted to shift in fast sequence the individual shiftable channels (12,12A;52) to the common channel (36).

8. Device as claimed in claim 7, **characterised in that**
(a) the image resolving sensor is an infrared sensor, and
(b) the means generating test images are adapted to generate heat images.

9. Device as claimed in claim 5, **characterised in that** each of the shiftable optical channels (12;12A;52) detects a sector of an extended field of view, the micro-mechanical mirror system (30) shifting in fast sequence the individual shiftable channels to the common channel (36).

## Revendications

1. Dispositif destiné à commuter des images optiques entre différents canaux, présentant les caractéristiques suivantes :
(a) plusieurs systèmes optiques de reproduction (18,26;18A,26A;50) grâce auxquels un plan d'image associé (14;48) et un plan d'image intermédiaire (28) sont susceptibles d'être reproduits à chaque fois dans un canal optique associé, susceptible d'être commuté (12,12A), en étant conjugués l'un sur l'autre,
(b) un système de miroirs à commande micromécanique (matrice de miroirs) (30) disposé dans le plan d'image intermédiaire (28) et muni d'une matrice de miroirs (34) susceptibles d'être commandés et logés de façon susceptible de basculer,
(c) un autre système optique de reproduction (38) grâce auquel le plan d'image intermédiaire (28) et un plan (42) associé au canal commun (36) sont susceptibles d'être reproduits dans un canal commun (36) en étant conjugués l'un sur l'autre et
(d) des moyens de commande (32) destinés à commander les miroirs (34) du système de miroirs à commande micromécanique (30) de sorte que les miroirs (34) couplent de façon optique, au choix, l'un des canaux susceptibles d'être commutés (12;12A) au canal commun (36).

2. Dispositif selon la revendication 1, **caractérisé en ce que** les systèmes optiques de reproduction des canaux optiques susceptibles d'être commutés comprennent respectivement
(a) un premier sous-système optique de reproduction (18;18A) grâce auquel le plan (14) associé au canal (12,12A) et un plan de miroirs (22;22A) sont susceptibles d'être reproduits en étant conjugués l'un sur l'autre,
(b) une disposition de miroirs (22;22A) disposée dans le plan de miroirs (20;20A) et
(c) un second sous-système optique de reproduction (26;26A) grâce auquel le plan de miroirs (20;20A) et le plan d'image intermédiaire (28) sont susceptibles d'être reproduits en étant conjugués l'un sur l'autre.

3. Dispositif selon la revendication 2, **caractérisé en ce que**
(a) le plan de miroirs (20), le second sous-système optique de reproduction (26) et le plan d'image intermédiaire (28) sont disposés les uns par rapport aux autres dans une position satisfaisant au critère de Scheimpflug et
(b) la disposition de miroirs (22) forme une matrice de miroirs formée par d'étroites bandes de miroirs (24) inclinées par rapport au plan de miroirs (20) grâce auxquelles la marche des rayons de reproduction est susceptible d'être déviée par le premier sous-système optique de reproduction (18) vers le second sous-système optique de reproduction (26) et vers le système de miroirs à commande micromécanique (30) se trouvant dans le plan d'image intermédiaire (28).

4. Dispositif selon la revendication 1, **caractérisé en ce que** les systèmes optiques de reproduction (50) des canaux optiques susceptibles d'être commutés (52) comprennent respectivement un dispositif optique décentré grâce auquel le plan (48) associé au canal optique (52) et le plan d'image intermédiaire (28) sont susceptibles d'être reproduits en étant directement conjugués l'un sur l'autre.

5. Dispositif selon l'une des revendications 1 à 4, **caractérisé en ce que** plusieurs systèmes optiques de reproduction formant respectivement un canal optique (12;12A;52), et dont chacun reproduit dans le plan d'image intermédiaire (28) un plan associé (14;48), sont disposés autour d'un axe formant l'axe optique (40) de l'autre système optique (38) et s'étirant perpendiculairement par rapport au plan d'image intermédiaire (28).

6. Dispositif selon l'une des revendications 1 à 5, **caractérisé en ce qu'**un capteur à résolution d'image est disposé dans le plan (42) associé au canal optique commun (36).

7. Dispositif selon la revendication 6, **caractérisé en ce que** des moyens de génération d'image test sont disposés respectivement dans les plans associés aux canaux susceptibles d'être commutés (12,12A;52), une commutation des différents canaux susceptibles d'être commutés (12,12A;52) sur le canal commun (36) étant effectuée dans une succession rapide par le système de miroirs à commande micromécanique (30).

8. Dispositif selon la revendication 7, **caractérisé en ce que**
(a) le capteur à résolution d'image est un capteur infrarouge et
(b) les moyens de génération d'image test sont installés afin de générer des images thermiques.

9. Dispositif selon la revendication 5, **caractérisé en ce que** chacun des canaux optiques susceptibles d'être commutés (12,12A;52) saisit un secteur d'un champ de vision élargi, une commutation des différents canaux susceptibles d'être commutés (12,12A;52) sur le canal commun (36) étant effectuée dans une succession rapide par le système de miroirs à commande micromécanique (30).
